# EUROPÄISCHE PATENTSCHRIFT

(11) **EP 3 977 340 B1**
(45) Veröffentlichungstag und Bekanntmachung des Hinweises auf die Patenterteilung: **07.01.2026**
(21) Anmeldenummer: 20729048.7
(22) Anmeldetag: 27.05.2020
(51) Int. Cl.: G06V 20/69, G06V 10/82, G06F 18/2413

(54) **SYSTEM ZUR ERMITTLUNG DER WIRKUNG VON WIRKSTOFFEN AN ACARIFORMES, INSEKTEN UND ANDEREN ORGANISMEN EINER TESTPLATTE MIT KAVITÄTEN**
SYSTEM FOR DETERMINING THE EFFECT OF ACTIVE AGENTS ON ACARIFORMS, INSECTS AND OTHER ORGANISMS IN A TEST PLATE WITH CAVITIES
SYSTÈME DE DÉTERMINATION DE L'ACTION DES AGENTS ACTIFS SUR ACARIFORMES, INSECTES ET AUTRES ORGANISMES DANS UNE PLAQUE D'ESSAI À CAVITÉS

(30) Priorität: 03.06.2019 EP 19177911
(43) Veröffentlichungstag der Anmeldung: 06.04.2022
(73) Patentinhaber: Bayer Aktiengesellschaft, 51373 Leverkusen (DE)
(72) Erfinder: LINZBACH, Johannes, 50859 Köln (DE); BACH-ZELEWSKI, Barthel, 42855 Remscheid (DE); OCHMANN, Klaus, 51377 Leverkusen (DE); FOIS, Franco, 40789 Monheim (DE); ILG, Kerstin, 50670 Köln (DE); KÖLLEN, Angelika, 51105 Köln (DE)
(74) Vertreter: BIP Patents
(86) Internationale Anmeldenummer: PCT/EP2020/064682
(87) Internationale Veröffentlichungsnummer: WO 2020/244990

(56) Entgegenhaltungen:
- WO-A2-2016/172532
- DATABASE INSPEC [online] THE INSTITUTION OF ELECTRICAL ENGINEERS, STEVENAGE, GB; March 2018 (2018-03-01), GOPAKUMAR G P ET AL: "Convolutional neural network-based malaria diagnosis from focus stack of blood smear images acquired using custom-built slide scanner", XP002796096, Database accession no. 17817944
- JOURNAL OF BIOPHOTONICS WILEY-VCH GERMANY, vol. 11, no. 3, 6 August 2023 (2023-08-06), ISSN: 1864-063X, DOI: 10.1002/JBIO.201700003
- PATTEN T ET AL: "Automatic Heliothis Zea Classification Using Image Analysis", TOOLS WITH ARTIFICIAL INTELLIGENCE, 2004. ICTAI 2004. 16TH IEEE INTERN ATIONAL CONFERENCE ON BOCA RATON, FL, USA 15-17 NOV. 2004, PISCATAWAY, NJ, USA,IEEE, 15 November 2004 (2004-11-15), pages 320 - 327, XP010759692, ISBN: 978-0-7695-2236-4
- GOPALAKRISHNA PILLAI GOPAKUMAR ET AL: "Convolutional neural network-based malaria diagnosis from focus stack of blood smear images acquired using custom-built slide scanner", JOURNAL OF BIOPHOTONICS, vol. 11, no. 3, 1 March 2018 (2018-03-01), DE, XP055647478, ISSN: 1864-063X, DOI: 10.1002/jbio.201700003
- KURTULMUS FERHAT ET AL: "Detection of dead entomopathogenic nematodes in microscope images using computer vision", BIOSYSTEMS ENGINEERING, ACADEMIC PRESS, UK, vol. 118, 7 December 2013 (2013-12-07), pages 29 - 38, XP028816021, ISSN: 1537-5110, DOI: 10.1016/J.BIOSYSTEMSENG.2013.11.005
- FRANÇOIS MALLARD ET AL: "An Automated Image Analysis System to Measure and Count Organisms in Laboratory Microcosms", PLOS ONE, vol. 8, no. 5, 29 May 2013 (2013-05-29), pages e64387, XP055646889, DOI: 10.1371/journal.pone.0064387
- DE SOUZA MIRAYR R Q ET AL: "A Framework for Automatic Recognition of Cell Damage on Microscopic Images using Artificial Neural Networks", 2018 40TH ANNUAL INTERNATIONAL CONFERENCE OF THE IEEE ENGINEERING IN MEDICINE AND BIOLOGY SOCIETY (EMBC), IEEE, 18 July 2018 (2018-07-18), pages 636 - 639, XP033431808, DOI: 10.1109/EMBC.2018.8512361

## Beschreibung

Die Erfindung betrifft ein System und ein Verfahren zur Ermittlung der Wirkung von Wirkstoffen an Organismen, wie Insekten, Acariformes und Nematoden, in einer Testplatte mit Kavitäten.

Relevanter Stand der Technik ist PATTEN T ET AL: "Automatic Heliothis Zea Classification Using Image Analysis", 2004. ICTAI 2004. Seiten 320-327, ISBN: 978-0-7695-2236-4.

Viele Arten von Insekten, Acariformes und Nematoden stellen Schädlinge in der Landwirtschaft dar, da sie Beschädigung der Pflanzenorganen, wie z. B. der Blätter den Pflanzenstoffwechsel stark beeinträchtigen können. Beispielen für Insekten und Acariformes sind Myzus, Persicae, Spodoptera, Frugiperda, Phaedon, Cholecaria, Spinmilben wie Tetranychus urticae. Gegen einen Insekten- bzw-Acariformesbefall sind bereits verschiedene chemische Substanzen, die sogenannten Insektiziden bzw. Acariziden, entwickelt worden. Jedoch besteht ein großer Bedarf, weitere Wirkstoffe zu identifizieren, durch die Schädlinge wirkungsvoll bekämpft werden können.

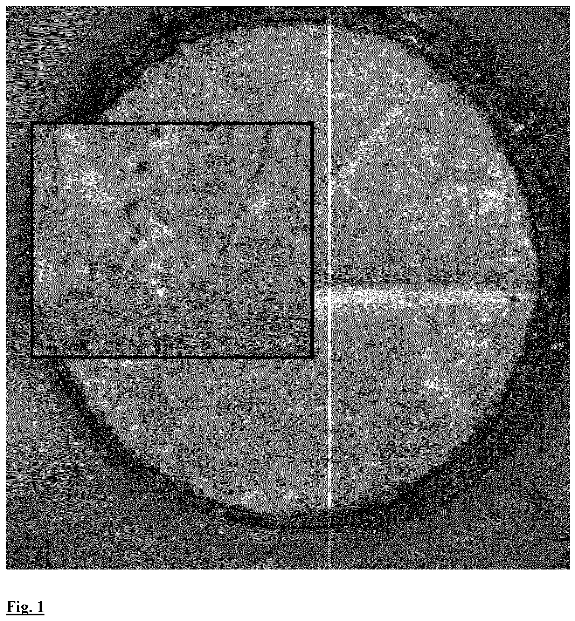

Die Nutzung von Testplatten für solche Untersuchungen ist bekannt. Typischerweise wird eine Well Standard Platten (MTP), z. B. eine 12-Well -MTP verwendet. Die Kavitäten werden beispielsweise mit Agar befüllt und jeweils eine Blattscheibe mit einem für die Kavität adäquaten Durchmesser in die Kavität gelegt. Auf diesen Blattscheiben befinden sich z. B. Tetranychus urticae, auch Spinnmilben benannt. Bezogen auf die Größe einer MTP von ca. 80mm x 110mm sind die zu detektierenden Objekte sehr klein ca. 0,2-0,6 mm. Um diesen Sachverhalt zu verdeutlichen, wurde in Fig. 1 ein vergrößerter Ausschnitt eines Blattes (ca. 20mm) in einer Kavität dargestellt.

Aufgabe ist es die Testplatten vor und nach der Applikation von einem Wirkstoff automatisiert mit Hilfe der Bildaufnahme- und -analysetechnik zu erfassen und auszuwerten.

Zur Bildaufnahme wird ein Bild des Objekts, hier der Träger, d. h. das Blatt(stück), in der Kavität auf dem Kamerasensor aufgenommen, auf dem das Objekt genauso groß erscheint wie das Objekt selbst; der Abbildungsmaßstab ist dann circa 1, auch als 1: 1 dargestellt. In Sinne der Erfindung wird pro Bild eine gesamte Kavität der MTP aufgenommen.

Da eine Blattscheibe nicht absolut plan in der Kavität der MTP liegt, und durch den Abbildungsmaßstab bedingt eine sehr geringe Tiefenschärfe, typischerweise weniger als einem Millimeter, vorhanden ist, sind viele Bereiche in einem Bild unscharf. Für die Bildanalyse wird ein scharfes Bild einer gesamten Kavität benötigt. Dies wird durch die Nutzung einer Kombination aus Serienaufnahme der Kavität und eines Bildverabeitung-Algorithmuses , sogenannte "Focus Stacking"/ erreicht. Hierfür wird eine Bildfolge aufgenommen, bei der nur die Fokussierung oder der Aufnahmeabstand verändert wurde, so dass sich die Bilder im Wesentlichen nur in der Schärfeebene unterscheiden. Die Methode des Focus Stacking erzeugt ein Bild der Kavität auf dem das Blatt komplett scharf abgebildet wird, das ausgewertet wird.

Bei der Auswertung sollten die einzelnen Organismen - insbesondere Spinnmilben, Acariformes, Insekten oder Nematoden - erkannt werden, und idealerweise das entsprechende Entwicklungsstadium. Es sollte auch zwischen lebende und tote Organismen unterschieden werden können. Mit anderen Worten sollte eine automatische Klassifizierung der Organismen nach folgenden Kriterien: Adulte, Larven, Eier, N/A (nicht bestimmbar) und zusätzlich jeweilige Subdifferenzierung: lebend, tot, N/A (nicht bestimmbar) ermöglicht werden.

Da sich lebende Tiere ggf. sehr schnell bewegen und eine schnelle Gesamtmessung erwünscht ist, ist eine relative kurze Messzeit pro Kavität erwünscht. Um High Throughput Screening zu ermöglichen, sollte außerdem für die Bild-Aufnahmen einer kompletten MTP (Multititerplatte) maximal 50 Sekunden vergehen.

Der Erfindung liegt daher die Aufgabe zu Grunde, eine Lösung zur Ermittlung der Wirkung von Wirkstoffen an lebenden Organismen, Insekten, Acariformes und Nematoden, in einer Testplatte mit Kavitäten bereitzustellen. Insbesondere sollte die erfindungsgemäße Lösung anwendbar sein, wenn die Organismen sich auf einem nichtplanen Träger - wie z. B. auf einem Blattstück - befinden oder in der Kavität bewegen. Die Lösung soll eine schnelle, zuverlässige Ermittlung der Wirkung der Wirkstoffe und High Throughput Screening der Wirkung eines Wirkstoffes an lebenden Insekten, Acariformes oder Nematoden ermöglichen.

Die der Erfindung zu Grunde liegende Aufgabe wurde durch ein System zur Ermittlung der Wirkung von Wirkstoffen an lebenden Organismen untergebracht auf einem Träger in einer Kavität nach Anspruch 1 gelöst. Ausführungsbeispiele des Systems können den von Anspruch 1 abhängigen Ansprüchen entnommen werden. Ferner wird die der Erfindung zu Grunde liegende Aufgabe durch die Verfahren nach Anspruch 7 gelöst. Ausführungsbeispiele des Verfahrens können den von Anspruch 7 abhängigen Ansprüchen entnommen werden.

Die erfindungsgemäße Vorrichtung zur Aufnahme von makroskopischen Bildern von Organismen untergebracht auf einem Träger in mindestens einer Kavität umfasst:
- eine Kamera mit einer Optik, wobei die Kamera über die Kavität angeordnet ist und dazu dient, von der Kavität mehrere makroskopische Bilder mit unterschiedlicher Schärfeebenen aufzunehmen,
- eine Einrichtung zur Änderung der Schärfeebene,
- eine Einrichtung zur Beleuchtung der Kavität mit wenigstens einer Lichtquelle, wobei die Einrichtung für die Beleuchtung die Kavität homogen von oben ausleuchtet,
- eine horizontal in zwei Richtungen x,y bewegliche Einrichtung für die Positionierung der Kavitäten.

Die Schärfeebene ist durch Änderung des Fokuses der Optik und/oder der Distanz zwischen der Optik und der Zellkulturplatte änderbar.

Die erfindungsgemäße Vorrichtung kann zur Aufnahme von makroskopischen Bildern von anderen Objekten mit komplexen dreidimensionaler Struktur, wie z. B. Kristallen, oder Objekten auf unbekannter Distanz in Bezug auf die Kamera, vorzugsweise untergebracht auf eine Halterung.

Bevorzugt sind die Einrichtungen für die Positionierung der Kavitäten, die hochauflösende Kamera und/oder die Einrichtung zur Änderung der Schärfeebene mit Hilfe eines Computerprograms steuerbar. Besonders bevorzugt sind alle diese Komponenten der Vorrichtung steuerbar.

Die Vorrichtung umfasst Komponente zur Übertragung, Speicherung und Verarbeitung der Bilder.

Bevorzugt ist die Vorrichtung Teil eines Systems umfassend Module ausgelegt für die Betätigung der jeweiligen Elemente der Vorrichtung zur Aufnahme von makroskopischen Bildern, wobei die Module des Systems mit den Elementen der Vorrichtung über Schnittstellen verbunden sind.

Typischerweise wird für die Betätigung der jeweiligen Elemente der Vorrichtung zur Aufnahme von makroskopischen Bildern einen oder mehrere der folgenden Module verwendet:
- ein Modul ausgelegt für die Einstellung und Betätigung der Einrichtung zur Änderung der Schärfeebene - auch Schärfeebenemodul genannt, verbunden mit der Einrichtung zur Änderung der Schärfeebene,
- Ein Modul zur Bildaufnahme und Kamerasteuerung - auch Bildaufnahmemodul genannt, verbunden mit der Kamera und ausgelegt für die Aufnahme von mehreren Bildern (Bilderserie) mit unterschiedlichen Schärfeebene pro Kavität und
- Ein oder mehrere Datenbankmodule ausgelegt für die Speicherung von Bildern, wobei ein der Datenbankmodule mit der Kamera verbunden ist.

Vorzugsweise werden Bilder von Kavitäten angeordnet in einer Zellkulturplatte (generisch auch Anordnung von Kavitäten genannt) aufgenommen. In den Kavitäten der Zellkulturplatte lassen sich Organismen, ein Träger, wie z. B. ein Blattstück, mit einem Wirkstoff in Kontakt bringen. Diese Zellkulturplatte weist eine Unterseite, eine Oberseite sowie Seitenwände auf, die sich zwischen Unterseite und Oberseite erstrecken. In den unterschiedlichen Kavitäten können unterschiedliche Wirkstoffe und / oder unterschiedliche Organismen eingefüllt sein. Auch kann es Kavitäten geben, in denen sich nur Organismen ohne Wirkstoff befinden. Der Fachmann wird den Aufbau des entsprechenden Assay nach Bedarf planen und durchführen.

Zur effizienten und eindeutige Bearbeitung und Auswertung der Bildaufnahmen verfügt üblicherweise jede Zellkulturplatte über eine lesbare ID, wie z. B. einen Barcode, der eingelesen werden kann und zusammen mit den Analyseergebnissen, Kavität- und Zellkulturplatten-spezifisch, in eine Datenbank übertragen wird. Vorzugsweise wird die Information über das Assay - wie z. B. Wirkstoffen, Wirkstoffmenge, Organismen ebenfalls Kavität- und Zellkulturplatten-spezifisch hinterlegt. Hierfür verfügt das System über ein Datenbankmodul oder ist mit einer solchen Datenbank verbunden.

Das System umfasst ein Prozessmodul für die Koordination der Bildaufnahme ausgelegt, so dass zwischen zwei Bildaufnahme einer Bilderserie auf einer Kavität die Änderung der Schärfeebene nach einem vordefinierten Ablauf durchgeführt wird, und eine Bilderserie aufgenommen wird.

Die Bilderserien werden Kavität- und Zellkulturplatten-spezifisch, in einem Datenbankmodul gespeichert.

Am Ende der Aufnahme der Bilderserie für eine Kavität, wird üblicherweise ein Befehl zur Positionierung der nächsten Kavität in Bezug auf die Kamera erteilt. Vorzugsweise wird dieser Befehl an die Einrichtung für die Positionierung der Kavitäten erteilt.

Vorzugsweise ist die Einrichtung für die Positionierung der Kavitäten horizontal in den Richtungen x und y beweglich. Eine solche Einrichtung wird auch X/T-Tisch oder Kreuztisch genannt. Die entsprechenden Kavitäten werden mit dem einstellbare X/Y Tisch/Kreuztisch für die Aufnahme einer Bilderserie angefahren. In einer besonderen Ausführungsform der Vorrichtung wird ein motorischer Scanning-Tisch verwendet.

Bevorzugt ist diese Einrichtung für die Positionierung der Kavitäten computersteuerbar. Hierfür verfügt die Vorrichtung über entsprechende Schnittstelle mit einem entsprechenden Modul - auch Kavitätspositionierungsmodul genannt - das für die Betätigung der Einrichtung für die Positionierung der Kavitäten konfiguriert ist.

In dieser Ausführungsform ist das Kavitätspositionierungsmodul ausgelegt für die:
- Platzierung einer Kavität in einer vordefinierten Position im Bezug zum die Optik (auch Einstellung der Kavität genannt) durch horizontalen Bewegung der Zellkulturplatten mit Hilfe der Einrichtung für die Halterung der Zellkulturplatte,
- Wiederholung für jede Kavität bis alle Kavitäten aufgenommen wurden,

In einer besonderen Ausführungsform der Vorrichtung sind die Elemente der Vorrichtung in einem Gehäuse unterbracht. Vorzugsweise umfasst die Vorrichtung dann eine UV-Lampe zur Reinigung des Gehäuses. Bevorzugt ist die Keimtötung für die Positionierung der Kavitäten in das bzw. aus dem Gehäuse ein/ausfahrbar. Vorzugsweise ist die Kavitätspositionierungsmodul dann ausgelegt zum automatischen Ein/ausfahren der Einrichtung für die Positionierung der Kavitäten in das bzw. aus dem Gehäuse.

Um die Organismen abzubilden wird eine Kamera, eingesetzt. Die Kamera umfasst einen Sensor, der ein Abbildungsmaßstab 1:1 einer Kavität auf dem Sensor ermöglicht.

Vorzugsweise wird eine Kavität mit einem Innendurchmesser von 22 mm und ein quadratischer Sensor mit einer Breite von 23 mm oder Sensorfläche von 5120x5120 Pixeln (25MPix) verwendet, um ein optimales Bild zu erhalten.

Typischerweise werden farbige Bilder bevorzugt im sichtbaren Spektrum, aufgenommen.

Da sich die Tiere schnell bewegen und daher eine relative kurze Messzeit erforderlich ist, wurde die Allied Vision Bonito pro Kamera und CoaxExpress Schnittstelle zwischen Kamera und einer Steuerungseinrichtung ausgewählt, mit dieser Kombination können Bilder mit bis zu 60 FPS (Frames per Second) aufgenommen werden.

Die Optik besteht typischerweise aus einem Objektiv charakterisiert durch einen Abbildungsmaßstab z. B. 1:10 kombiniert mit einem Balgen oder einem Zwischenring, um den Abbildungsmaßstab 1:1 oder größer zwischen der Kavität und die Sensorfläche zu erreichen.

Da die Träger meistens nicht plan in der Kavität liegen, und durch den Abbildungsmaßstab, Blende und Arbeitsabstand bedingt eine sehr geringe Schärfentiefe vorhanden ist, sind bei einer Einzelbildaufnahme viele Bereiche im Bild unscharf. Für die Bildanalyse wird ein durchgehend scharfes Bild jeder Kavität benötigt. Bevorzugt wird hierfür die durch die Kamera aufgenommenen Bilderserie verarbeitet. Dies wird durch die Nutzung einer Kombination aus fotographische Serienaufnahme (Bilderserie) und digitaler Bildverarbeitungstechnik, sogenannte "Focus Stacking"/Fokusvariation, erreicht. Hierfür wird eine Bildfolge/Bilderserie verwendet, bei der nur die Fokussierung oder der Aufnahmeabstand verändert wurde, so dass sich die Bilder im Wesentlichen nur in der Schärfeebene unterscheiden. Dabei ist es möglich eine Bildserie einer kompletten Kavität innerhalb maximal einer Sekunde aufzunehmen. Dies ist für Hochdurchsatzscreening ein deutlicher Vorteil im Vergleich zu Stand der Technik.

Dieser nimmt bisher nur von einem Teil der Kavität mit entsprechender Auflösung (d. h. die Anzahl von Pixel pro Organismus), um kleine Objekte zu erkennen, jeweils eine Bildserie mit Fokusvariation (Fokus Stacking) auf und stellt für jede Kavität jeweils viele Bildserien (Fokus Stacking Bilder) zusammen. Diese Methode hat den Nachteil, dass die Methode viel Zeit pro Kavität benötigt, dass die Bilder aufwendig zueinander ausgerichtet werden müssen und zusätzlich das Risiko besteht, ein sich bewegenden Organismus doppelt oder gar nicht aufnimmt.

Die Änderung der Schärfeebene wird mit Hilfe des steuerbaren Elements zur Änderung der Schärfeebene erreicht. Die Änderung der Schärfeebene kann durch Fokusierung am Objektiv oder durch Änderung des Abstands zwischen Kamera und Objekt bzw. zwischen Objektiv und Objekt (hier der Träger) entlang der vertikalen Achse (z-Achse) erreicht werden.

In einer ersten Ausführungsform der Erfindung besteht die Optik aus einem Fixfokus-Objektiv und einem Balgen. In dieser Ausführungsform erfolgt die Änderung der Schärfeebene durch Verstellung des Balgens. Bevorzugt ist das Balgen über eine Schnittstelle mit Hilfe eines Schärfeebenemoduls verstellbar, wobei das Schärfeebenemodul für die Verstellung des Balgens ausgelegt ist. In dieser Ausführungsform ist die Distanz zwischen dem Objektiv und der Zellkulturplatte typischerweise durch eine feste Montage der Kamera zur Einrichtung für die Positionierung der Kavitäten festgelegt.

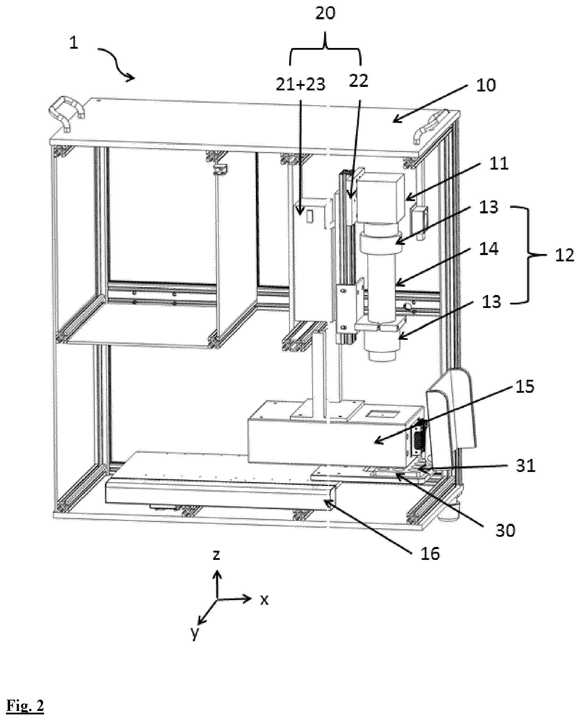

In einer bevorzugten Ausführungsform der Erfindung besteht die Optik aus einem Fixfokus-Objektiv z. B. einem mit Abbildungsmaßstab 1:10 und einer oder mehreren Zwischenringen (siehe Fig. 2). Die Konfiguration des Fixfokus-Objektivs wird vorzugsweise so berechnet, dass ein Abbildungsmaßstab von 1:1 zwischen dem Sensor und einer Kavität erreicht wird. Z. B. wurde für den oben beschriebenen Sensor und einer Kavität aus einer Standard 12-Kavitäten MTP ein QIOPTIQ INSPEC.X L 105/5,6-1,0X, ein Präzisionsobjektiv für Bildkreis bis 82 mm optimiert für die erwünschte Vergrößerung durch Zusammensetzung mit einem Tubus von ca. 120 mm verwendet. In dieser Ausführungsform wird die Schärfenebene üblicherweise einmalig eingestellt und nicht mehr verändert. Die Änderung der Schärfeebene erfolgt über die Änderung des Aufnahmeabstands, definiert durch die Distanz zwischen dem Objekt und dem Objektiv. Diese Änderung kann durch Bewegung der Kamera oder der Kavität entlang der vertikalen Achse (auch z-Achse genannt) erreicht werden. Vorzugsweise wird die Kamera auf eine Einrichtung zur Bewegung der Kamera montiert, die eine präzise Bewegung der Kamera entlang der vertikalen Achse ermöglicht. Beispielsweise ist die Kamera mit Hilfe einer motorische z-Achse präzis einstellbar und bewegbar. Bevorzugt ist diese Einrichtung für eine präzise Einstellung und Bewegung steuerbar.

Bevorzugt verfügt die Einrichtung zur Bewegung der Kamera über eine Schnittstelle mit einem Schärfeebenemodul, wobei dieses für die Einstellung und Änderung der Schärfeebene konfiguriert sind.

In einer besonderen Ausführungsform der Erfindung ist das Schärfeebenemodul ausgelegt für:
- die Einstellung der Kamera, bzw. Einstellung der Schärfeebene durch Positionierung der Kamera entlang der vertikalen Achse (z-Richtung),
- die Berechnung / Einstellung des Abstands zwischen den Schärfeebenen zweier Bilder einer Bilderserie, und
- die Bewegung der Kamera nach dem vordefinierten Abstand zur Änderung der Schärfeebenen.

Die Bewegung der Kamera für die Bildaufnahme einer Kavität wird auch Fahrt der Kamera genannt.

Typischerweise steuert das Prozessmodul die Bilderaufnahme für jede Kavität. Üblicherweise werden von jeder Kavität bis zu 50 Einzelbilder in kurzer Folge in unterschiedlichen Fokusebenen während einer Fahrt der Kamera erfasst. Der typische Abstand zwischen den Fokusebene zweier Bilder beträgt 0.25 mm.

Die Optik besitzt bauartbedingt eine geringe Lichtstärke, welche eine sehr helle Beleuchtung notwendig macht. Vorzugsweise wird eine Lichtleistung von 250W bis 350W benötigt. Um diese Anforderung nachzugehen, wird bevorzugt ein Element zur Koaxialbeleuchtung verwendet, dass eine Lichtquelle, ein zur Koaxialbeleuchtung montierter halbdurchlässiger Spiegel umfasst. Die Lichtstärke wurde mit Hilfe ein LED-Array als Lichtquelle erreicht. Beispielsweise wurde eine Lichtquelle aus 16 weißen HighPower LED's verwendet, die eine Lichtleistung von circa 300W erzielt (geblitzt). Um eine homogene und helle Ausleuchtung zu erhalten, weist das Element zur Koaxialen Beleuchtung vorzugsweise ein Diffusor zwischen die Lichtquelle und dem Spiegel auf. Es ist ggf. vorteilhaft die Lichtquelle zu kühlen, dies wird z. B. mit Hilfe eines Elements zur passiven Kühlung erreicht. Das Prinzip der Koaxialbeleuchtung ist dem Fachmann bekannt und beispielsweise auf http://www.effilux.fr dargestellt.

Das Element zur Koaxialbeleuchtung ist vorzugsweise als Blitz-Beleuchtung mit kurzen, sehr hellen Lichtblitzen ausgelegt, um Bilder in schneller Folge während der Bewegung der Kamera/Objektivkombination und der Tiere zu erfassen. Bevorzugt wird hierfür die Lichtquelle im Blitzmodus betrieben; typischerweise ist hierfür das Beleuchtungsmodul mit der Kamera verbunden. Mit der oben beschriebenen Lichtquelle kann eine Blitzzeit von 40µs - 1500µs erreicht werden. Typischerweise ist die Steuerungseinrichtung konfiguriert für die Steuerung der Beleuchtungseinrichtung im Blitzmodus.

Typischerweise ist das Element zur Koaxialbeleuchtung so dimensioniert, dass es die komplette Testplatte oder mindestens die unter der Kamera platzierten Kavität homogen beleuchtet. Bevorzugt ist das Element zur Koaxialbeleuchtung dimensioniert, um circa 120% der Fläche der aufzunehmenden Kavität zu beleuchten.

Typischerweise weist eine Testplatte eine feste Anzahl X in einer Reihe angeordnete Kavitäten, wobei sich bei einer Anzahl Y nebeneinander angeordneten Reihen insgesamt einzelne X mal Y Kavitäten ergeben würden. Für die erfindungsgemäße Lösung werden Zellkulturplatte mit einem Gesamtanzahl von Kavitäten von 30 (Raster 3x4) bevorzugt, alternativ sind Raster von 4x6 oder 6x8 oder 8x12 ebenfalls anwendbar.

Das Verfahren zur Ermittlung der Wirkung von Wirkstoffen an Organismen, wie Insekten, Acariformes und Nematoden, in einer Testplatte mit Kavitäten sieht zunächst die Befüllung wenigstens einer Kavität der Zellkulturplatte mit einem Blatt auf Agar, lebenden Organismen und einem Wirkstoff vor. Die Zellkulturplatte wird dann in eine Vorrichtung gemäß den obigen Ausführungen gesetzt.

Die Bildaufnahme erfolgt nach dem Verfahren zur Bildaufnahme, indem folgende Schritte durchgeführt werden:
a) Platzierung einer Kavität oder einer Anordnung von Kavitäten in der Einrichtung für die Positionierung der Kavitäten in einer vordefinierten Position in Bezug auf die Kamera durch horizontalen Bewegung der Kavität bzw. der Anordnung von Kavitäten mit Hilfe der Einrichtung für die Positionierung der Kavitäten,
c) Einstellung einer Schärfeebene durch Betätigung der Einrichtung zur Änderung der Schärfeebene,
d) Bildaufnahme mittels der Kamera,
e) Speicherung des Bildes in einem Datenbankmodul,
f) Änderung der Schärfeebene durch Betätigung der Einrichtung zur Änderung der Schärfeebene,
g) Wiederholung der Schritte d) bis e) zur Aufnahme einer vordefinierten Anzahl von Bildern in einer Bilderserie,
h) Wiederholung der Schritte a) bis g) für die nächste Kavität bis alle Kavitäten aufgenommen wurden.

In dem erfindungsgemäßen Verfahren wird die Bilderserie mit der Fokus-Stacking Methode in ein möglichst durchgehend scharfes Bild, d. h. ein Bild erhöhter Tiefenschärfe, verarbeitet.

Das erfindungsgemäße System umfasst ein Modul ausgelegt für die Verarbeitung einer makroskopischen Bilderserie mit der Fokus-Stacking Methode - auch Bilderverarbeitungsmodul genannt. Das erfindungsgemäße System wird so ausgelegt, dass die Bereitstellung von einer Bilderserie aus einem Datenbankmodul, die Durchführung der Stacking-Methode in dem Bilderverarbeitungsmodul und die Speicherung des mit der Stacking-Methode erzeugten Bildes erhöhter Tiefenschärfe in einem Datenbankmodul erfolgen kann.

Die Bildverarbeitung mit der Fokus-Stacking Methode umfasst typischerweise folgende Schritte:
- Eine Bilderserie wird dem Modul zur Bilderverarbeitung bereitgestellt,
- Pro Bild wird eine Analyse der Bildschärfe durchgeführt.
- Aus verschiedenen Bildern werden dann die jeweils schärfsten Bereiche ausgeschnitten,
- Da sich bei der Fokusänderung eine Änderung des Abbildungsmaßstabs ergeben kann und sich Objekte im Bild geringfügig verschieben können, wird vor der eigentlichen Montage der einzelnen Bilder eine Bildtransformation zur bestmöglichen Überlagerung der Bilder durchgeführt,
- Anschließend werden die jeweils schärfsten Bereiche der Bilder zu einem Bild mit erhöhter Schärfetiefe zusammengefügt.

Mit diesem Verfahren wird pro Kavität mindestens ein Bild erhöhter Tiefenschärfe bereitgestellt. Typischerweise wird das durchgehend scharfes Bild in ein Datenbankmodul gespeichert wird und / oder an ein Modul konfiguriert für die Bildanalyse (auch Bildanalysemodul genannt) transferiert wird.

Dem Fachmann ist es offensichtlich, dass die Auswahl und Auslegung der Module des Systems an die steuerbaren Einrichtungen der erfindungsgemäßen Vorrichtungen zur Aufnahme von makroskopischen Bildern angepasst werden können; auch die Unterbringung des Bilderverarbeitungsmoduls bzw. Bildanalysemoduls ist nach Bedarf beliebig gestaltbar.

Es folgen die Schritte der automatisierten Analyse eines makroskopischen Bildes, bevorzugt eines durchgehend scharfen makroskopischen Bildes. Liegt kein durchgehend scharfes Bild vor, kann die Analyse auf den scharfen Teil eines makroskopischen Bildes durchgeführt werden.

Die Analyse wird durch eine Bilderkennungssoftware durchgeführt. Die Bilderkennungssoftware ist so konfiguriert, dass sie die Bilder auf das Vorhandensein spezifischer (charakteristischer) Merkmale untersucht. Bei der vorliegenden Erfindung werden Organismen auf dem Träger mittels Objekterkennung identifiziert und nach vordefinierten Eigenschaften klassifiziert.

In einer bevorzugten Ausführungsform der Analyse erfolgt eine automatische Klassifizierung der Organismen nach folgenden Kriterien: Adulte, Larven, Eier, N/A (nicht bestimmbar) - auch Stadium genannt - und/oder lebend, tot, N/A (nicht bestimmbar) - auch Status genannt .

Typischerweise werden die Position und Größe der Organismen im Bild und deren jeweiligen Status und/oder Stadium ermittelt und ausgegeben.

Für die maschinelle Analyse eines Bildes wird ein Model verwendet, das eine Verbindung zwischen Bildmerkmale und die oben genannte Klassifizierung beinhaltet. Für die Analyse werden ein oder mehrere neuronale Netze für Bildanalyse verwendet, die trainiert werden müssen.

Bevorzugt wird für das Training des/der neuronalen Netze supervised learning angewendet. Das bedeutet, dass ein neuronales Netz annotierte Bilder (Trainingsbilder und Validierungsbilder) erhält, auf denen alle Organismen mittels Expertenwissens annotiert wurden, und damit trainiert wird. Bei der Annotation wird jedem Organismus eine Position (auch Objektposition genannt), eine Objektgröße und ein Stadium und / oder ein Status zugeordnet. Annotierte Bilder werden typischerweise wie folgt vorbereitet: der Expert markiert im Bild über ein User Interface die visuell erkannten Organismen. Zum. Beispiel wird jeder Organismus einzeln mit einem RoI (Region of Interest, z. B. in Form eines Rechtecks/Bounding Box) umrandet und mit der gewünschten Klassifizierung (Status und Stadium) annotiert. Diese Informationen können in einer Textdatei zusammen mit der Bilddateinamen abgespeichert werden. In dieser Textdatei wird typischerweise die Position der RoI, ihre Größe bzw. die Koordinaten der einem Organismus zugeordneten Pixels und die Klassifizierung für jeden Organismus hinterlegt.

Bevorzugt wird auch die Objektgröße maschinell erhoben und gespeichert. Der Expert kann in einem weiteren Schritt über eine Nutzeroberfläche dazu aufgefordert werden, jedes Objekt als Organismus zu bestätigen und entsprechend zu annotieren.

Liegen die als solche annotierten Organismen vor, kann der Expert dazu aufgefordert werden, jedem annotierten Organismus einer oder mehreren vordefinierten Klassifizierungen zuzuordnen:(z. B. Entwicklungsstadium - Adulte, Larven, Eier oder N/A (nicht bestimmbar), und/oder eine Differenzierung zwischen lebend, tot oder N/A).

Mit einem Set von annotierten Bildern (Input für Training) werden anschließend die neuronalen Netzwerke trainiert. In dem Set der Bilder wurden zum Beispiel ca. 16000 Annotationen verwendet.

Neu aufgenommene Bilder können dann mit Hilfe dieser trainierten Algorithmen (neuronale Netzwerke) analysiert werden.

Das oben beschriebene Verfahren, dass mit besonderen Arten von neuronalen Netzwerken realisiert wird, unterteilt sich also in Objekterkennung (Position und Größe) und Objektklassifizierung.

Für die Anwendung des erfindungsgemäßen Verfahrens für Screening an kleinen lebenden Organismen werden bevorzugt neuronale Netze zur Objektdetektion ausgewählt, die die nötige Präzision und Geschwindigkeit aufweist.

Beispielsweise wurden Region basierte faltende neuronale Netze (region based convolutional neural net, auch R-CNN genannt) verwendet. Insbesondere wurde ein Faster R-CNN verwendet, eine Lösung, die aus zwei Module besteht, wie z. B. von Ren et al. beschrieben, (Ren, Shaoqing ; He, Kaiming; Girshick, Ross; Sun, Jian: Faster R-CNN: Towards Real-Time Object Detection with Region Proposal Networks. In: Advances in Neural Information Processing Systems (NIPS), Curran Associates, Inc.,2015, S.91-99, https://arxiv.org/pdf/1506.01497.pdf). Das erste Modul ist ein tiefes vollständig gefaltetes Netzwerk (deep fully convolutional network), das Regionen vorschlägt, auch Region Proposal Netwerz (RPN) genannt, Nach dem PRN wird eine "RoI pooling" durchgeführt, um RoIs mit einer festen Größe zu erhalten. Im zweiten Modul werden die Ergebnisse der "RoI pooling" mit Hilfe eines Fast R-CNN detectors klazifiziert (R. Girshick, "Fast R-CNN," in IEEE International Conference on Computer Vision (ICCV), 2015 - DOI: 10.1109/1CCV.2015.169). Für das Training des Faster R-CNN wurde wie von Ren et al. vorgeschlagen die "4-Step Alternating" Trainingsmethode ausgewählt.

Im Genauer wird beim Faster R-CNN Algorithmus zunächst das Bild auf potentielle Objekte untersucht; die Objekterkennung und Ermittlung deren Position wird typischerweise mit einem Region Proposal Netzwerk (RPN) realisiert dabei wird jeder Stelle im Bild einem Objekt (hier einem mutmaßlichen Organismus) oder dem Hintergrund bzw. dem Träger zugeordnet. Es wird vorzugsweise eine Wahrscheinlichkeit für das Vorliegen eines Objekts an eine bestimmte Stelle im Bild ermittelt - auch "Score" genannt, der anschließend mit Hilfe eines einstellbaren Grenzwerts gefiltert wird. Beispielsweise wurde als RPN ein Deep Residuales Net mit 101, Schichten (auch ResNet 101 genannt) verwendet (Kaiming He, Xiangyu Zhang, Shaoqing Ren, Jian Sun, Deep Residual Learning for Image Recognition, CVPR paper - http://openaccess.thecvf.com/content_cvpr_2016/papers/He_Deep_Residual_Learning_CVPR_2016_pa per.pdf). Zum Beispiel wurde das Faster R-CNN aus der TensorFlow Object Detection API mit einem ResNet 101 verwendet.

Auch für die automatische Vergabe von Klassifizierungen kann mit Hilfe eines entsprechend trainierten. Faster R-CNN algorithmus erreicht werden.

Als Alternative zu Faster R-CNN können weitere Deep Learning Multiobject Detection Algorithmen, wie z. B. YOLO, YOLOv2, YOLOv3, Retina Net, SSD, R-FCN, Fast R-CNN und R-CNN verwendet werden.

In einem Beispiel wird das gefundene Objekt, einem Stadium und / oder Status erst automatisch zugeordnet, wenn das Vorhandensein eines Organismus als zuverlässig gilt. Für die Vergabe eines entsprechenden Stadiums und / oder Status kann ebenfalls ein Wert für die Validität der Klassifizierung, berechnet und ausgegeben werden.

In einem Beispiel wird mit Hilfe eines Testdatensatz von annotierten Bildern die Zuverlässigkeit der maschinell durchgeführten Analyseergebnisse ermittelt. Daran kann eine Fehlerquote z. B. in Form einer Wahrheitsmatrix (Confusion Matrix) ermittelt werden.

Das Ergebnis der entsprechenden Analyse - Position und Klassifizierung der Organismen - wird vorzugsweise Kavität- und Kulturplatten-spezifisch in einem Datenbankmodul hinterlegt und / oder ausgegeben.

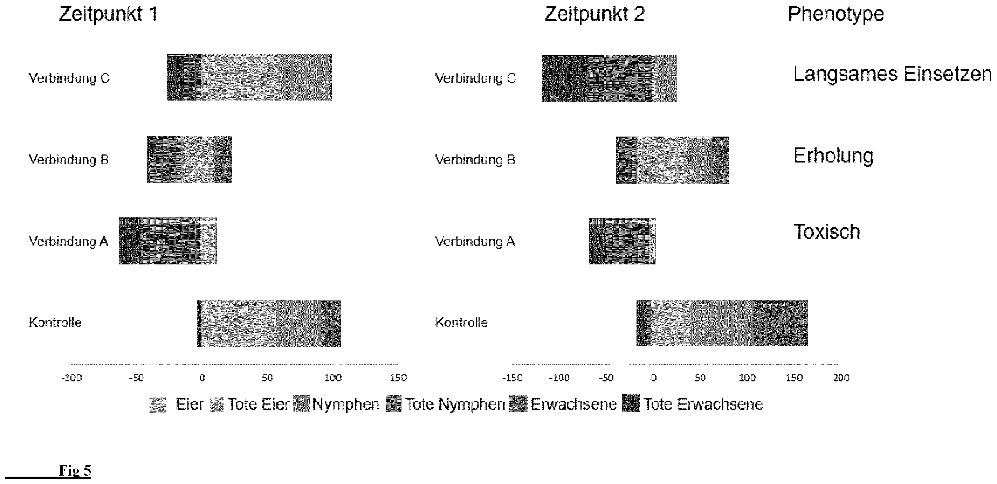

In einer besondere Ausführungsform des Verfahrens und zur Ergebnisse Visualisierung werden die jeweiligen Organismen nach ihrer Kategorisierung nach Stadium/ und Status auf der Bildaufnahme nach vordefinierten Regeln unterschiedlich markiert. Beispielsweise wird ein Organismus in einem Stadium durch einen Rahmen mit einer festgelegten Form umrandet und der Status des Organismus mittels einer Färbung der Umrandung bemerkbar gemacht. Auch können Textmarkierung verwendet werden. Die Auswahl der Markierung ist beliebig. Eine mögliche Markierung wird in Fig. 5 dargestellt.

Aus der berechneten Anzahl der Organismen nach Stadium und/oder Status können Zeitreihen für Phänotypen der Populationen (Fig 6), d. h. eine Phänologie der Organismen, erstellt werden. Diese Phänologie stellt die Vermehrung der Organismen und die Änderung deren Phänotyp über die Zeit dar.

Es wird vermerkt, dass das Verfahren zur Bildanalyse auch für die Analyse von Bildern verwendet werden kann, die nicht mit dem Verfahren zur Bildaufnahme und Verarbeitung bereitgestellt wurden, vorausgesetzt diese Bilder entsprechende Qualität aufweisen.

Die Erfindung wird nachfolgend anhand von Figuren und Beispielen näher beschrieben, ohne die Erfindung auf die beschriebenen und gezeigten Merkmale oder Merkmalskombinationen beschränken zu wollen.

Anhand der in den Figuren dargestellten Ausführungsbeispiele soll die Erfindung näher erläutert werden. Es zeigen:
- Figur 1: Spinnmilben auf einer Blattscheibe in einer Kavität
- Figur 2: schematisch im Querschnitt ein Ausführungsbeispiel für die erfindungsgemäß Vorrichtung zur Aufnahme von makroskopischen Bildern
- Figur 3: Systemdiagram

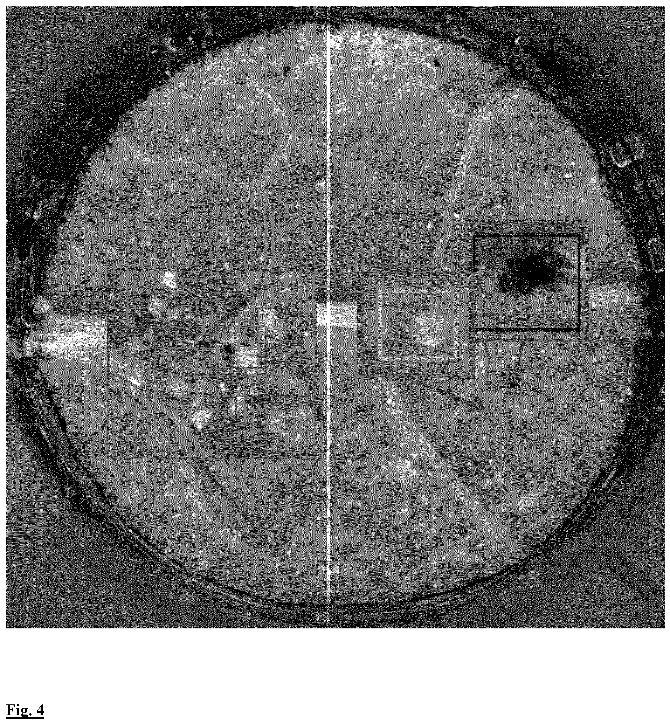

- Figur 4: Beispiele für ein Bild mit Markierung der Organismen und deren Eigenschaften
- Figur 5: Beispiele für Zeitreihen für Phänotypen der Population

### Bezugzeichenliste

- 1: Vorrichtung zur Aufnahme von makroskopischen Bildern
- 2: System

- 10: Gehäuse
- 11: Kamera
- 12: Optik
- 13: Objektiv
- 14: Zwischenringe
- 15: Einrichtung zur Koaxialbeleuchtung
- 16: Kreuztisch - horizontal in zwei Richtungen x,y bewegliche Einrichtung für die Halterung einer Zellkulturplatte (30) mit mehreren Kavitäten

- 20: Einrichtung zur Bewegung der Kamera
- 21: Motor zur Bewegung der Kamera entlang der z-Achse
- 22: Kamerahalterung
- 23: z-Achse (vertikale Achse)

- 30: Zellkulturplatte
- 31: Kavität der Zellkulturplatte (30)

- 40: Prozessmodul
- 41: Schärfeebenemodul zur Steuerung der Einrichtung zur Bewegung der Kamera (20)
- 42: Bildaufnahmemodul zur Steuerung der Bildaufnahme
- 43: Datenbankmodul
- 44: Kavitätspositionierungsmodul oder Modul für die Steuerung des Kreuztisches (16)
- 45: Schnittstellen
- 46: Bilderverarbeitungsmodul ausgelegt für die Verarbeitung der makroskopischen Bilder mit der Fokus-Stacking Methode
- 47: User Interface

- 50: Bildanalysemodul
- 51: Datenbankmodul

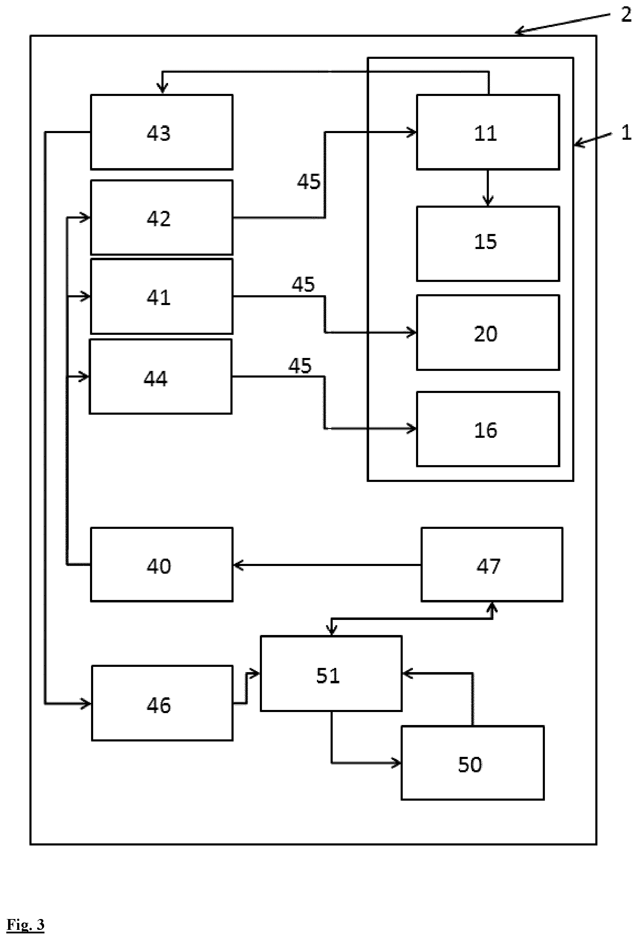

Figur 2 zeigt schematisch im Querschnitt eine Vorrichtung zur Vorrichtung zur Aufnahme von makroskopischen Bildern. Die Vorrichtung 1 weist ein Gehäuse 10 auf, in dem eine Kamera 11 mit einem Objektiv 13, bestehend aus Objektiv 13 und Zwischenringe 14 angeordnet ist. Des Weiteren ist in dem Gehäuse 10 ein Kreuztisch für die Positionierung einer Kavität 31 einer Zellkulturplatte 30 vorgesehen. Die Vorrichtung weist eine Einrichtung zur Koaxialbeleuchtung 14 der Zellkulturplatte 30, die aus dem Stand der Technik bekannt ist, und entsprechend nicht genauer dargestellt ist. Durch die Vorrichtung 10 ist es möglich, mit der Kamera 11 mehrere, zeitlich aufeinanderfolgende digitale Bilder einer Kavität 31 mit vordefinierter Änderung der Schärfenlage zu erstellen, wobei die Bilder von der Oberseite 33 der Kavität aufgenommen werden. Entsprechend ist die Kamera 11 oberhalb der Kavität 31 angeordnet. Für die Änderung der Schärfenlage weist die Vorrichtung 1 eine Einrichtung zur Bewegung der Kamera 20, die eine Kamerahalterung 22, eine z-Achse 23 und ein Motor zur Bewegung der Kamera 21 entlang der z-Achse umfasst. Die Kamera 11 kann sich kontinuierlich bewegen und in vordefinierten Abständen die Kavität 31 aufnehmen. Alternativ kann die Kamera 11 für die Aufnahme anhalten und weiterfahren. Fig. 3 zeigt in einem Diagramm des erfindungsgemäßen Systems, welche Komponente die Automatisierung der Bildaufnahme, Bildverarbeitung und Bildanalyse ermöglichen. Die Bildaufnahme wird von einem Schärfeebenemodul 41 und von einem Bildaufnahmemodul 42 im Einklang mit einem vordefinierten Ablauf durchgeführt. Die Aufnahme einer Bilderserie erfolgt automatisch. Am Ende der Aufnahme einer Bilderserie wird die nächste Kavität 31 unter der Kamera 11 mit Hilfe des Kreuztischen 16 platziert und eine neue Bilderserie wird aufgenommen. Zur Steuerung des Kreuztisches 16 weist das System ein Kavitätspositionierungsmodul 44 auf. Der Ablauf der Bildaufnahme von einer oder mehrerer Kavitäten wird von einem Prozessmodul 40 vorgegeben, das mit einem Verfahren zur Aufnahme von Bildern konfiguriert ist. Aus einer Bilderserie wird in einem Bildverarbeitungsmodul 46 ein durchgehend scharfes Bild mit Hilfe der Fokus-Stacking Methode erzeugt. Dieses Bild wird dem Bildanalysemodul 50 bereitgestellt. In diesem Modul wird das Bild analysiert. Das Ergebnis dieser Analyse wird in einem Datenbankmodul 51 zusammen mit dem Bild hinterlegt und über ein User Interface 47 angezeigt.

## Patentansprüche

1. System zur Ermittlung der Wirkung von Wirkstoffen an lebenden Organismen untergebracht auf einem Träger in mindestens einer Kavität einer Testplatte, umfassend:
- eine Testplatte mit mindestens einer Kavität befüllt mit einem nichtplanen Träger, lebenden Organismen, die sich auf dem nichtplanen Träger oder in der Kavität befinden oder bewegen können, wobei die Organismen Adulten, Larven, und / oder Eier von Insekten, Acariformes oder Nematoden sind, und einem Wirkstoff;
- eine Vorrichtung zur Aufnahme von makroskopischen Bildern der mindestens einer Kavität, wobei die Vorrichtung zur Aufnahme von makroskopischen Bildern umfasst:
- eine Kamera mit einer Optik und einem Kamerasensor, wobei die Kamera über die Kavität angeordnet ist und konfiguriert ist, um mehrere makroskopische Bilder einer Scene, in der sich die Kavität befindet, mit unterschiedlicher Schärfeebenen in Abbildungsmaßstab 1:1 auf das Kamerasensor aufzunehmen;
- eine Einrichtung zur Änderung der Schärfeebene,
- eine Einrichtung zur Beleuchtung der Kavität mit wenigstens einer Lichtquelle, wobei die Einrichtung für die Beleuchtung die Kavität homogen von oben ausleuchten kann,
- eine Steuerungseinrichtung umfassend:
- ein Prozessmodul konfiguriert für die Steuerung der Vorrichtung zur Aufnahme von makroskopischen Bildern, wobei das Prozessmodul so ausgelegt ist, dass eine Bilderserie für jede Kavität mit unterschiedlichen Schärfeebene nach einem vordefinierten Ablauf aufgenommen wird,
- ein Schärfeebenemodul ausgelegt für die Einstellung und Betätigung der Einrichtung zur Änderung der Schärfeebene,
- ein Bildaufnahmemodul konfiguriert für die Betätigung der Kamera,
- mindestens ein Datenbankmodul ausgelegt für die Speicherung von Bildern und/oder Bilderserie,
wobei das Bildaufnahmemodul für die Kamerasteuerung und das Datenbankmodul über Schnittstellen mit der Kamera verbunden sind,
wobei das Prozessmodul mit dem Bildaufnahmemodul und mit dem Schärfeebenemodul über Schnittstelle verbunden ist;
- ein Bilderverarbeitungsmodul, das für die Verarbeitung der Bilderserie einer Kavität aus dem Datenbankmodul in ein durchgehend scharfes makroskopisches Bild mit der Fokus-Stacking Methode ausgelegt ist;
- ein Bilderanalysemodul ausgelegt für die Objekterkennung des Organismus aus dem mit der Fokus-Stacking Methode verarbeiteten makroskopischen Bild und für die Klassifizierung des Organismus mit Hilfe eines mit annotierten Bildern trainierten neuronalen Netzes,
wobei die Klassifizierung in mindestens einer der folgenden Klassenliste erfolgen kann:
- Adult, Larve, Eier; und
- lebend oder tot.

2. System nach Anspruch 1, wobei die Einrichtung zur Beleuchtung der Kavität eine Einrichtung zur Koaxialbeleuchtung ist.

3. System nach einem der Ansprüche 1 oder 2, wobei die Optik aus einem Fixfokus-Objektiv und einer oder mehreren Zwischenringen besteht.

4. System nach Anspruch 3, wobei die Einrichtung zur Änderung der Schärfeebene eine Einrichtung zur Bewegung der Kamera entlang der vertikalen Achse (z) ist.

5. System nach einem der Ansprüche 2 bis 5, wobei die Vorrichtung zur Aufnahme von makroskopischen Bilder eine horizontal in zwei Richtungen (x,y) bewegliche Einrichtung für die Positionierung der Kavitäten umfasst.

6. System nach Anspruch 6, umfassend ein Kavitätspositionierungsmodul, das über eine Schnittstelle mit der Einrichtung für die Positionierung der Kavitäten verbunden ist und, das für die Durchführung folgende Schritte konfiguriert ist:
- Platzierung einer Kavität in einer vordefinierten Position in Bezug auf die Optik durch horizontale Bewegung der Testplatte mit Hilfe der Einrichtung für die Positionierung der Kavitäten,
- Wiederholung für jede Kavität, bis alle Kavitäten der Testplatte aufgenommen wurden.

7. Verfahren zur Anwendung des Systems nach einem der Ansprüche 1 bis 6 mit folgenden Schritten:
a) Befüllen mindestens einer Kavität einer Testplatte mit einem nichtplanen Träger, lebenden Organismen, wobei die Organismen Adulten, Larven, und / oder Eier von Insekten, Acariformes oder Nematoden sind, und einem Wirkstoff;
b) Platzierung der Testplatte in die Einrichtung für die Positionierung der Kavitäten in einer vordefinierten Position in Bezug auf die Kamera durch horizontale Bewegung der Kavität bzw. der Testplatte mit Hilfe der Einrichtung für die Positionierung der Kavitäten, so dass mehrere makroskopische Bilder einer Scene, in der sich mindestens die Kavität befindet, aufgenommen werden, wobei die Kamera über die Kavität angeordnet und konfiguriert ist, um mehrere makroskopische Bilder der Scene, mit unterschiedlicher Schärfeebenen auf einem Sensor in Abbildungsmaßstab 1:1 aufzunehmen;
c) Einstellung einer Schärfeebene durch Betätigung der Einrichtung zur Änderung der Schärfeebene,
d) Bildaufnahme mittels der Kamera,
e) Speicherung des Bildes in einem Datenbankmodul,
f) Änderung der Schärfeebene durch Betätigung der Einrichtung zur Änderung der Schärfeebene,
g) Wiederholung der Schritte d) bis e) zur Aufnahme einer vordefinierten Anzahl von Bildern in einer Bilderserie,
h) Verarbeitung der Bilderserie für jede Kavität mit der Fokus-Stacking Methode in ein durchgehend scharfes makroskopisches Bild der Kavität;
i) Wiederholung der Schritte a) bis h) für die nächste Kavität bis alle Kavitäten der Testplatte aufgenommen wurden;
j) Automatische Objekterkennung zur Ermittlung von Position der Organismen im makroskopischen Bild und Klassifizierung diesen mit Hilfe eines mit annotierten Bildern trainierten neuronalen Netzes;
k) Ausgabe der Position und/oder Anzahl sowie Klassifizierung der Organismen im makroskopischen Bild;
wobei die Klassifizierung für die Organismen in einer oder mehreren der folgenden Listen:
- Adulte, Larven, Eier; und
- lebend oder tot,
mit Hilfe eines mit annotierten Bildern trainierten neuronalen Netzes erfolgt.

8. Verfahren nach Anspruch 7, wobei bei der Objekterkennung eine Wahrscheinlichkeit für das Vorliegen eines Organismus an einer Position ermittelt wird, und das gefundene Organismus, erst automatisch klassifiziert wird, wenn diese Wahrscheinlichkeit über einem einstellbaren Grenzwert liegt.

9. Verfahren nach einem der Ansprüche 7 bis 8, wobei das Training des neuronalen Netzes durch Analyse von einem Training Set von makroskopischen Bildern der Organismen untergebracht auf einem Träger in einer Kavität erfolgt, indem für jedes Bild des Training Sets jeder Organismus im Hinblick auf seine Position, Größe und Klassifizierung durch einen Expert annotiert wurde.

## Claims

1. A system for determining the effect of active substances on living organisms housed on a carrier in at least one cavity of a test plate, comprising
- a test plate with at least one cavity filled with a non-planar carrier, living organisms which are located on or can move on the non-planar carrier or in the cavity, wherein the organisms are adults, larvae and/or eggs of insects, Acariformes or nematodes, and an active substance;
- a device for taking macroscopic images of the at least one cavity, wherein the device for taking macroscopic images comprises
- a camera having optics and a camera sensor, wherein the camera is disposed over the cavity and is configured to capture a plurality of macroscopic images of a scene containing the cavity with different focal planes at a 1:1 image scale on the camera sensor;
- a device for changing the focal plane,
- a device for illuminating the cavity with at least one light source, wherein the device for illuminating can illuminate the cavity homogeneously from above,
- a control device comprising
- a process module configured for controlling the device for taking macroscopic images, wherein the process module is designed to take an image series for each cavity with different focal planes according to a predefined sequence,
- a focal plane module configured to set and operate the focal plane changing device,
- an image acquisition module configured for actuating the camera,
- at least one database module configured for storing images and/or image series,
wherein the image acquisition module for camera control and the database module are connected to the camera via interfaces,
wherein the process module is connected to the image acquisition module and to the focal plane module via interfaces;
- an image processing module adapted to process the image series of a cavity from the database module into a continuously sharp macroscopic image using the focus stacking method;
- an image analysis module adapted for object recognition of the organism from the macroscopic image processed with the focus stacking method and for classification of the organism using a neural network trained with annotated images,
wherein the classification can be in at least one of the following class lists:
- adult, larva, egg; and
- live or dead.

2. The system according to claim 1, wherein the device for illuminating the cavity is a coaxial illumination device.

3. The system according to any one of claims 1 or 2, wherein the optics consists of a fixed-focus objective and one or more intermediate rings.

4. The system according to claim 3, wherein the device for changing the focal plane is a device for moving the camera along the vertical axis (z).

5. The system according to any one of claims 2 to 5, wherein the device for taking macroscopic images comprises a device movable horizontally in two directions (x, y) for positioning the cavities.

6. The system according to claim 6, comprising a cavity positioning module connected to the cavity positioning device via an interface and configured to perform the following steps:
- placing a cavity in a predefined position with respect to the optics by moving the test plate horizontally using the cavity positioning device,
- repeating for each cavity until all cavities of the test plate have been picked up.

7. Process for using the system according to any one of claims 1 to 6, comprising the following steps:
a) filling at least one cavity of a test plate with a non-planar carrier and living organisms, wherein the organisms are adults, larvae, and/or eggs of insects, Acariformes or nematodes, and with an active substance;
b) placing the test plate in the cavity positioning device in a predefined position with respect to the camera by moving the cavity or the test plate horizontally using the cavity positioning device so that a plurality of macroscopic images of a scene containing at least the cavity are captured, wherein the camera is positioned over the cavity and configured to capture a plurality of macroscopic images of the scene with different focal planes at a 1:1 image scale on a sensor;
c) setting a focal plane by operating the focal plane changing device,
d) capturing an image using the camera,
e) storing the image in a database module,
f) changing the focal plane by actuating the device for changing the focal plane,
g) repeating steps d) and e) to capture a predefined number of images in an image series,
h) processing the image series for each cavity using the focus stacking method into a continuously sharp macroscopic image of the cavity;
i) repeating steps a) to h) for the next cavity until all cavities of the test plate have been imaged;
j) performing automatic object recognition to determine the position of the organisms in the macroscopic image and classifying the organisms using a neural network trained with annotated images;
k) outputting the position and/or number and the classification of the organisms in the macroscopic image;
wherein the classification of the organisms is carried out into one or more of the following lists:
- adult, larva, egg; and
- live or dead,
using a neural network trained with annotated images.

8. The process according to claim 7, wherein a probability for the presence of an organism at a position is determined during object recognition, and the organism found is not automatically classified until this probability is above an adjustable limit value.

9. The process according to any one of claims 7 to 8, wherein the training of the neural network is performed by analysing a training set of macroscopic images of the organisms housed on a carrier in a cavity, in that for each image of the training set each organism has been annotated with respect to its position, size and classification by an expert.

## Revendications

1. Système comprenant l'évaluation de l'effet de substances actives sur des organismes vivants placés sur un support dans au moins une cavité d'une plaque d'essai, comprenant :
- une plaque d'essai ayant au moins une cavité remplie d'un support non plan, des organismes vivants qui sont ou peuvent se déplacer sur le support non plan ou dans la cavité, lesdits organismes étant des adultes, des larves et/ou des œufs d'insectes, d'acariformes ou de nématodes, et un agent actif ;
- un dispositif d'acquisition d'images macroscopiques d'au moins une cavité, ledit dispositif comprenant :
- une caméra comprenant une optique et un capteur de caméra, la caméra étant disposée au-dessus de la cavité et configurée pour acquérir une pluralité d'images macroscopiques d'une scène dans laquelle se trouve la cavité, avec différents plans de netteté à une échelle de reproduction de 1:1 sur le capteur de la caméra;
- un dispositif de modification du plan de netteté,
- un dispositif d'éclairage de la cavité avec au moins une source lumineuse, ledit dispositif d'éclairage étant apte à éclairer la cavité de manière homogène par le haut,
- une unité de commande comprenant :
- un module de traitement configuré pour commander le dispositif d'acquisition d'images macroscopiques, le module de traitement étant conçu pour acquérir, selon une séquence prédéfinie, une série d'images pour chaque cavité avec différents plans de netteté,
- un module de plan de netteté conçu pour régler et actionner le dispositif de modification du plan de netteté,
- un module de capture d'images configuré pour actionner la caméra,
- au moins un module de base de données conçu pour stocker des images et/ou des séries d'images,
le module de capture d'images pour la commande de la caméra et le module de base de données étant connectés à la caméra par des interfaces,
le module de traitement étant connecté au module de capture d'images et au module de plan de netteté par des interfaces ;
- un module de traitement d'images conçu pour traiter, au moyen de la méthode d'empilement de focalisation, la série d'images d'une cavité provenant du module de base de données en une image macroscopique d'une netteté homogène ;
- un module d'analyse d'images conçu pour reconnaître l'objet constitué par l'organisme à partir de l'image macroscopique traitée par la méthode d'empilement de focalisation et pour classifier l'organisme à l'aide d'un réseau neuronal entraîné avec des images annotées,
la classification pouvant être effectuée dans au moins l'une des listes de classes suivantes :
- adulte, larve, œuf ; et
- vivant ou mort.

2. Système selon la revendication 1, le dispositif d'éclairage de la cavité étant un dispositif d'éclairage coaxial.

3. Système selon l'une des revendications 1 ou 2, dans lequel l'optique est constituée d'un objectif à focale fixe et d'une ou plusieurs bagues intermédiaires.

4. Système selon la revendication 3, dans lequel le dispositif de modification du plan de netteté est un dispositif de déplacement de la caméra le long de l'axe vertical (z).

5. Système selon l'une des revendications 2 à 5, dans lequel le dispositif d'acquisition d'images macroscopiques comprend un dispositif de positionnement des cavités mobile horizontalement dans deux directions (x, y).

6. Système selon la revendication 6, comprenant un module de positionnement de cavité connecté par une interface au dispositif de positionnement des cavités et configuré pour réaliser les étapes suivantes :
- plaçant une cavité dans une position prédéfinie par rapport à l'optique par déplacement horizontal de la plaque d'essai au moyen du dispositif de positionnement des cavités,
- répétant l'opération pour chaque cavité jusqu'à ce que toutes les cavités de la plaque d'essai aient été acquises.

7. Procédé d'utilisation du système selon l'une des revendications 1 à 6, comprenant les étapes suivantes :
a) remplir au moins une cavité d'une plaque d'essai avec un support non plan, des organismes vivants, lesdits organismes étant des adultes, des larves et/ou des œufs d'insectes, d'acariformes ou de nématodes, et un agent actif ;
b) placer la plaque d'essai dans le dispositif de positionnement des cavités dans une position prédéfinie par rapport à la caméra en déplaçant horizontalement la cavité ou la plaque d'essai au moyen du dispositif de positionnement des cavités de manière à acquérir une pluralité d'images macroscopiques d'une scène dans laquelle se trouve au moins la cavité, la caméra étant disposée au-dessus de la cavité et configurée pour acquérir une pluralité d'images macroscopiques de la scène, avec différents plans de netteté sur un capteur à l'échelle de reproduction 1:1 ;
c) régler un plan de netteté en actionnant le dispositif de modification du plan de netteté,
d) capturer l'image au moyen de la caméra,
e) enregistrer l'image dans un module de base de données,
f) modifier le plan de netteté en actionnant le dispositif de modification du plan de netteté,
g) répéter les étapes d) à e) afin d'acquérir un nombre prédéfini d'images dans une série d'images,
h) traiter la série d'images pour chaque cavité au moyen de la méthode d'empilement de focalisation de manière à obtenir une image macroscopique de la cavité d'une netteté homogène,
i) répéter les étapes a) à h) pour la cavité suivante jusqu'à ce que toutes les cavités de la plaque d'essai aient été acquises,
j) reconnaitre automatiquement les objets afin de déterminer la position des organismes dans l'image macroscopique et en les classifiant à l'aide d'un réseau neuronal entraîné avec des images annotées ;
k) délivrer la position et/ou le nombre ainsi que la classification des organismes dans l'image macroscopique ;
la classification des organismes étant effectuée dans une ou plusieurs des listes suivantes :
- adultes, larves, œufs ; et
- vivant ou mort,
au moyen d'un réseau neuronal entraîné avec des images annotées.

8. Procédé selon la revendication 7, dans lequel, lors de la reconnaissance d'objets, une probabilité de présence d'un organisme à une position est déterminée et l'organisme détecté n'est classifié automatiquement que si cette probabilité est supérieure à une valeur limite réglable.

9. Procédé selon l'une quelconque des revendications 7 à 8, dans lequel l'apprentissage du réseau neuronal est réalisé par analyse d'un ensemble d'images d'apprentissage macroscopiques des organismes placés sur un support dans une cavité, en annotant pour chaque image de l'ensemble d'images d'apprentissage chaque organisme en termes de position, de taille et de classification par un expert.
